**Europäisches Patentamt**

(19) **European Patent Office**

**Office européen des brevets**

(11) Publication number : **0 302 872 B1**

# EUROPEAN PATENT SPECIFICATION

(12)

(45) Date of publication of patent specification : **10.06.92 Bulletin 92/24**

(51) Int. Cl.⁵ : **H01B 13/02**

(21) Application number : **87902516.1**

(22) Date of filing : **30.03.87**

(86) International application number : **PCT/FI87/00043**

(87) International publication number : **WO 87/06050 08.10.87 Gazette 87/22**

(54) **ALTERNATE REVERSE TWISTING METHOD AND APPARATUS.**

(30) Priority : **01.04.86 FI 861374**

(43) Date of publication of application : **15.02.89 Bulletin 89/07**

(45) Publication of the grant of the patent : **10.06.92 Bulletin 92/24**

(84) Designated Contracting States : **AT BE CH DE FR GB IT LI NL SE**

(56) References cited :
**EP-A- 0 103 963**
**EP-A- 0 104 725**
**DE-A- 1 465 550**
**DE-A- 3 227 481**
**US-A- 3 847 190**
**US-A- 3 910 022**

(73) Proprietor : **NOKIA-MAILLEFER HOLDING S.A.
Route du Bois
CH-1024 Ecublens-Lausanne (CH)**

(72) Inventor : **KARHU, Raimo, Kalervo
Juhana Herttuantie 5 B 8
SF-00600 Helsinki (FI)**

(74) Representative : **Schaumburg, Thoenes & Englaender
Mauerkircherstrasse 31 Postfach 86 07 48
W-8000 München 86 (DE)**

## Description

Elongated elements like leads, wires or similar are usually drawn in a SZ-twisting apparatus-for example by means of a tracked pulling device-from the input sides through a first circumferentially perforated holeplate serving as a fixed dividing means, through a periodically, into opposite directions rotating second circumferentially perforated oscillating holeplate serving as a twisting means into a pressing means, preferably a nipple, in which the elements are pressed tightly against each other. Further a spinning device can be used to bind the pressed elements as an alternate reversely twisted product. After the pulling device spooling takes place or the twisted product can be fed to a next work phase.

In such kind of a conventional SZ-twisting device, it has been usual to place between the dividing and twisting means a tubular intermediate element rotating with the twisting means being centrally fixed to it as well as mounted at its opposite end in bearings to rotate in relation to the dividing means.

This kind of a conventional arrangement, however, has the disadvantage that the rotational speed of the intermediate element is always constant so that twisting turns of elongated elements tend to accumulate at the end of the twisting means, whereby the pitch of the elongated elements becomes denser and their angular deviation into the twisting means increases. Then, between the direction reverse points of the twisting direction, the number of helices of the twisted elements is very limited being 10 at the most, and the force required for pulling the elements increases whereby the helices of the twisted product tend to open.

This main problem, i.e., accumulation of the elements to be twisted, great pulling force and low number of helices has previously been tried to be solved by principally three different methods, however, without finding a satisfactory solution.

Firstly, according to patent publications US-A-3910022 and US-A-4414802 between a fixed dividing holeplate and a periodically oscillating twisting holeplate a torsion-elastic torsion pipe is provided, the inner space of which has been divided by spacers for keeping the elements to be twisted apart from each other, whereby said spacers thus define feedpaths of individual elements to be twisted.

Secondly, according to public FI-patent application 803958 and publication US-A-4426838, between a fixed dividing holeplate and a periodically oscillating twisting holeplate a torsion-elastic torsion cable, rod or wire is provided to which several disk-shaped and circumferentially perforated disks spaced apart in the axial direction are fixed, whereby the openings of the perforated disks serve as guide means for individual elements to be twisted.

Thirdly, according to publications US-A-4426839 and SU-549943 between the fixed dividing holeplate and a periodically oscillating twisting holeplate several separate pipe or spiral means are provided so that the space inside each individual pipe or spiral means serves as a guide means for individual elements to be twisted. According to said US-publication the pipe means have been bound together by plates provided with circumferential openings for the pipe means, while according to the SU-publication the spiral means extend freely between dividing and twisting means.

The above-mentioned disadvantages, i.e. accumulation of elements, great pulling force and small number of helices has also been tried to be solved by a solution according to US-A-3847190, in which the pipes defining feed-paths of individual elongated elements to be twisted have been arranged inside a larger cylindrical mantle tube and fixed at their one ends to a fixed dividing holeplate and at their other ends to the end flange of said rotating mantle tube. The precharacterizing part of claim 1 is based on this document.

Disadvantages have also been tried to be solved by the apparatus according to DE-A-3404264 which describes an improved conventional SZ-standing apparatus including one rigid central pipe rotating with the twisting means whereby the elements to be twisted are wound around the periphery of said central pipe. The jamming effect, caused by accumulation, has been tried to be solved by providing the dividing holeplate with its own rotational drive and by mounting an intermediate circumferentially perforated holeplate in bearings onto the periphery of the central pipe and providing it with its own rotational drive. Thus, the axial distance by which the elongated elements are wound around the central pipe can be somewhat increased due to the rotatable intermediate plate, but the main problem, i.e. growing friction and small number of helices cannot be eliminated yet.

Though it has been possible by the afore-mentioned solutions to slightly reduce the accumulation tendency of the elements to be twisted as well as the adverse effects of this disadvantage, the problem has not yet been solved in a satisfactory manner. The most substantial disadvantage is the following :

– If a torsion cable or similar is used between the dividing and twisting means and said torsion cable is provided with several axially spaced apart perforated disks to guide individual elongated elements, said elongated elements are wound against said torsion cable. Thus, it is impossible to eliminate the obvious disadvantages, i.e., jamming factor and growing friction when the number of twisting turns into one direction exceeds 10. It can also be mentioned that it is impossible to provide by this kind of method or apparatus products demanding the use of a central or "core" element.

The main problem of the present invention is to provide an improved alternate reverse twisting method and apparatus, by which the above mentioned disadvantages related to previously known alternate reverse twisting methods and apparatus could essentially be overcome.

The invention solves this problem by a method having the features of claim 1 and by an apparatus having the features of claim 9, respectively. Further developments are described in the respective subclaims.

The present invention is based on the idea that the means provided between the dividing and twisting means are intended both to support every individual element to be twisted and to define a friction-free feedpath for every individual element to be passed through the apparatus. According to the present invention, it is now possible essentially to increase the number of twisting turns in both directions, and the distance between the reverse points of twisting direction, as well as the effective lateral distance at which the peripheral torsion-elastic pipes are wound around the periphery of the central pipe. This results in a decrease of the accumulation tendency of the elongated elements towards the twisting means and the high friction effect and the high pulling force applied to the elongated elements to be twisted.

Preferred embodiments of the present invention will now be described by way of example with reference to accompanying drawing in which:

FIG. 1 is a side elevational view partly in cross-section of alternate reverse twisting apparatus according to the first embodiment,

FIG. 2 is a cross-sectional view of means according to one embodiment for defining the feedpaths of elongated elements to be passed through the SZ-twisting apparatus, whereby said means are arranged between the dividing and the twisting means,

FIG. 3 is a longitudinal cross-section of means according to another embodiment for defining the feedpaths of elongated elements to be passed through the SZ-twisting apparatus, whereby said means are arranged between the dividing and the twisting means,

FIG. 4 is a simplified and partly cross-sectional side view of the alternate reverse twisting apparatus according to the second embodiment of the present invention, and

FIG. 5 is a cross section of a fastening arrangement of a peripheral pipe located in one opening of the dividing and/or twisting means.

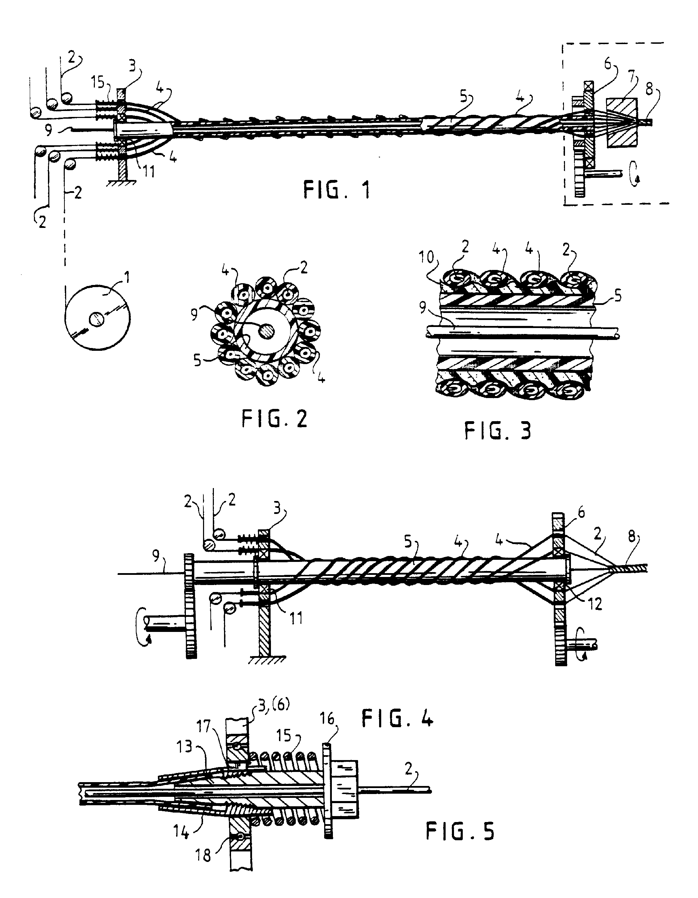

As may be seen from FIG. 1 or 4, the alternate reverse twisting apparatus, which hereinafter is referred to as "SZ-twisting apparatus", includes:

– fixed dividing means 3 arranged at the input end of the elements 2 to be twisted, as electric and/or optical wires, leads and fibers, both partial wires or leads and quads as well as groups thereof, which herinafter is referred to as "wires", are drawn from starting spools and twisted in the SZ-twisting apparatus,

– twisting means 6, periodically rotatable into opposite directions and arranged at the output end of the wires to be twisted, as well as

– support and guide means 4 and 5 arranged between the dividing and the twisting means 3 and 6, which define the feedpaths for the wires 2 to be twisted.

When a SZ-twisted product is being manufactured in the SZ-twisting apparatus the wires 2 to be twisted and a possible core element 9 which can for instance be a cable, electric or optical lead, polypropylene, polystyrene or paper core wire or similar, are drawn, as already mentioned before, through the dividing means 3 into the support and guide means 4 and 5 and therefrom through the twisting means 6 into the pressing means 7. Preferably a nipple is provided having in the feeding direction of wires 2 a conically tapering opening in which the SZ-twisted wires 2 and the eventual core element 9 are pressed tightly against each other. An alternate reversely twisted product 8 is formed which can further be bound by a suitable spinning device (not shown in the drawing) to eliminate the danger of untwisting.

Both the dividing means 3 and the twisting means 6 are composed preferably of a perforated holeplate, or the like, both including:

– a central opening for the central pipe 5 and the eventual core element 9 to be drawn through it, and

– several separated openings for the peripheral pipes 4 and the wires 2 to be drawn therethrough arranged circumferentially at equal distance from each other and radially from said central opening.

In the SZ-twisting apparatus shown in FIGS. 1 and 4, the fixed hole-plate 3 for dividing wires 2 and the eventual core element 9 is stationary fastened to a first support structure of the SZ-twisting apparatus. The perforated twisting holeplate at the output ends of the wires 2 and the eventual core element 9 is mounted in bearings to a second support structure of the SZ-twisting apparatus and is provided with its own rotational drive, preferably composed of an electric motor with chain, gear or belt transmission, whereby the oscillating rotation speed regulation and reversing automatics can be realized in a simple manner.

To solve the problem of the invention, the support and guide means 4 and 5 which define the feedpaths for wires 2 and for the eventual core element 9, are composed of a pipe group shown in FIG. 2, whereby the pipe group includes a central pipe 5, through which the eventual core element 9 of the product to be manufactured is drawn, and several twistable pheripheral pipes 4 surrounding the central pipe 5 peripherally, through which the wires 2 to be twisted are drawn.

In the SZ-twisting apparatus, said peripheral pipes are thin having a diameter of between 5 to 20 mm, preferably of about 10mm, and being made of torsion-elastic material, preferably of polyamide or polytetrafluorethylene and fixed in the circumferentially arranged openings of both the dividing holeplate or holedisk and the twisting holeplate or holedisk, whereby the peripheral pipes 4 form a pipe mantle around the central pipe 5. According to one preferred embodiment shown in FIG. 2, the peripheral pipes 4 are arranged side by side close to each other, so that the pipe mantle formed by-individual peripheral pipes 4 extends substantially uniformy around the central pipe 5. When the peripheral pipes 4 are made of e.g. polytetrafluorethylene the advantage is obtained that sliding friction between the peripheral pipe 4 and wire 2 is extremely low which tends to facilitate the easy passing of wires 2 through the peripheral pipes 4.

During the twisting phase of the wires 2 the peripheral pipes 4 are wound around the periphery of the central pipe 5 as a result of the rotational movement of the twisting holeplate 6. To compensate for the growing tensile stress caused by this twisting, the ends of the peripheral pipes 4 have been fixed in their axial direction resiliently in the circumferentially arranged openings in the dividing holeplate 3. Corresponding resilient connections can also be used at the end of the twisting holeplate 6. If the SZ-twisting apparatus is used for rapid twisting of thin wires, like e.g. electric leads or optical fibers, it is preferable to bind the peripheral pipes 4 elastically to each other, whereby the harmful effect caused by centrifugal forces as well as the so called "skip-rope" phenomenon can be totally eliminated. This can most simply be achieved e.g. by arranging an elastic connecting ring (not shown) around the peripheral pipes or by connecting the peripheral pipes already in their manfacturing phase e.g. by elastic strip portions.

Because the wires 2 to be twisted pass through the peripheral pipes 4, they are not in contact with the central pipe 5, whereby the rotating central pipe 5 does not cause friction impeding the drawing of wires or generate any jamming danger.

To obtain at least 10 or even 100, preferably between 30 to 80 as successfully tested, twisting turns of the peripheral pipes 4 into one direction around the central pipe 5 each torsion-elastic peripheral pipe 4 is fixed, as shown in FIG. 5, in the circumferential openings of the perforated dividing holeplate 3 and/or in the circumferential openings of the perforated twisting holeplate 6 (not shown in FIGS. 1 or 3), resilient in axial direction and rotatable around its longitudinal axis. Since twisting of each peripheral pipe 4 around the central pipe 5 does not cause a torsional load to the peripheral pipe 4 and due to the resilient attachment, the tensile stress can be kept as small as possible. This kind of attachment can be obtained e.g. in such a way, that each peripheral pipe 4 is compressed between conical countersurfaces of two compression locking pieces 13 and 14, whereby the outer locking piece 14 is mounted with bearings in the opening of the perforated dividing holeplate 3 (or twisting holeplate 6) to rotate around and to move axially in relation to the longitudinal axis of the peripheral pipe 4. The locking can be achieved e.g. by a wedge means 17 locking the outer piece 14 and the bearing 18. To achieve resiliency, one of the locking pieces 13 or 14 (in FIG. 5 that is the inner locking piece 13) is provided with a flange16, whereby between said flange 16 and the perforated disk 3 (or 6) resilient means 15 are provided, for example a coil spring as shown in FIG. 5, rotating with the peripheral pipes 4 and collapsing when the peripheral pipes 4 are winding around the central pipe 5, whereby too high tension of the peripheral pipes 4 can be prevented.

The central pipe 5 comprises a rigid, preferably prestressed and rotating metal pipe arranged on support structures or of a torsion-elastic torsion pipe made e.g. of plastic-based material, preferably of polyamide, and arranged on support structures.

In the embodiment shown in FIG. 1, the central pipe 5 is made of polyamide. It must be emphasized that the central pipe 5 can also be made of metal, e.g. steel. In this embodiment, the central pipe 5 is prestressed between a first and a second support structure, whereby the disadvantages due to sag and centrifugal forces can be eliminated. As shown in FIG. 1, the end of the central pipe 5 at the input side of the wires to be twisted is arranged in the central opening of the perforated dividing holeplate 3, and is provided with a bearing arrangement 11 resisting axial load, e.g. a thrust or ball bearing. To ensure the axial immobility of the central pipe 5, its outer surface is provided with a radially extending support flange resting against the above mentioned bearing 11. As further shown in FIG. 1, the end of the central pipe 5 at the outlet side of the wires 2 to be twisted has been rigidly fastened in the central opening of the perforated twisting holeplate 6. This opening is preferably conical, in which case the central pipe 5 is compressively locked at its outer surface by a locking piece corresponding the inner surface of said conical opening. In this embodiment, the rotational movement of the central pipe 5 as well as the oscillating twisting movement of the peripheral pipes 4 in opposite directions are achieved by means of the alternate reversely rotating twisting holeplate 6.

When the central pipe 5 is made torsion-elastic it is preferable to provide that end of the central pipe at the dividing holeplate 3 with an own rotational drive to adjust the twisting rate of the central pipe 5, whereby is is possible to increase the effective length at which the wires 2 will be wound inside the peripheral pipes 4 around the central pipe. Further, it is possible by such an arrangement to decrease both the accumulation tendency and the angular deviation at the end of the central pipe 5 at the twisting holeplate 6.

In the embodiment shown in FIG. 4, the central pipe 5 is made of metal, e.g. steel, and prestressed between a first and a second support structure (not shown), whereby the disadvantages caused by sag and centrifugal forces can be minimized. Of course, the central pipe 5 can be also made of plastic based material, e.g. polyamide.

According to this second embodiment shown in FIG. 4, the central pipe 5 is arranged centrally both to the stationary dividing holeplate 3 and to the alternate reversely rotating twisting holeplate 6, and mounted to rotate substantially free and untwisted in relation to both, the dividing and the twisting holeplate. In this embodiment, the central pipe 5 is supported at its both ends by bearings 11 and 12, preferably thrust- or ballbearings resisting axial load. The axial immobility of the central pipe 5 can be ensured for example by providing its outer surface with radially extending flanges, one of which rests against the bearing 11 at the side of the dividing holeplate 3, and the other of which rests against the bearing 12 at the side of the twisting holeplate 6. As further can be seen in FIG. 4 that the end of the central pipe 5 at the dividing holeplate 3 is provided with a rotational drive, which can be e.g. an electric motor with chain, belt, gear or similar transmission. The freely adjustable oscillating rotational speed as well as the direction of the central pipe 5 result in that the central pipe 5 is rotatably oscillating at a speed or even direction different to the oscillating rotational movements of the twisting holeplate 6 and the peripheral pipes 4. Thereby it is possible to reduce friction between the central pipe 5 and peripheral pipes 4 and spread the windings of peripheral pipes 4 on a longer portion of the surface of the central pipe 5. An arrangement according to this second preferred embodiment evens out the pitch of the peripheral pipes 4 wound around the central pipe 5 particularly at that end of the central pipe 5 at the twisting holeplate 6, or reduces the so-called pitch error.

To prevent the flattening of the peripheral pipes 4 wound around the central pipe 5, which may impede movements of the wires 2 through the peripheral pipes 4, and to eliminate the sliding of the peripheral pipes 4 axially on the surface of the central pipe 5, which may increase jamming probability, pitch error and the accumulation of the peripheral pipes 4, especially at the side of the twisting holeplate 6, the outer perimeter of the central pipe 5 is provided, as shown in FIG. 3, with a resilient material layer 10, which is made of polyurethane, and to which the peripheral pipes 4 are pressed during winding around the central pipe 5.

When an SZ-twisted product is manufactured by the SZ-twisting apparatus according to the present invention, it should include a central core element 9 and SZ-twisted peripheral wires 2 surrounding the core element 9. The core element 9 extending the whole length of the product to be manufactured is drawn through the central pipe 5 into the nipple 7 simultaneously with the wires 2 to be twisted and being drawn into the mouthpiece 7 through the peripheral pipes 4 to be wound around the central pipe 5.

When the inner diameter of the central pipe 5 is selected substantially larger than the diameter of the core element 9 to be drawn therethrough, the core element 9 can be coated before the twisting holeplate 6, preferably before the dividing holeplate 3, with an intermediate layer of e.g. insulating or binding materials when a binding layer is used, the above mentioned binding after the nipple 7 by means of thread or band for ensuring the twisting maintenance can be eliminated and the twisted wires 2 are fastened, thus keeping their pitch in the nipple to said binding layer 10.

When the central pipe 5 is composed of a torsion-elastic torsion pipe, the bearing arrangement of the central pipe 5 at the end of the dividing holeplate 3 described in connection with the FIG. 1 is not necessary. The central pipe 5 can be arranged between the first and the second support structures so that it is stationary and centrally fastened at its one end to the dividing holeplate 3 and at its other end also stationary and centrally to the twisting holeplate 6, whereby the central pipe 5 is twisted periodically into opposite directions corresponding to the oscillating rotational movement of the twisting holeplate 6.

When the central pipe is a torsion pipe, its end at the dividing holeplate 3 is arranged in a bearing, preferably resisting axial load, and provided with a rotational drive, like an electric motor with suitable power transmission. The other end of the central pipe can then be fastened centrally and stationary to the twisting holeplate, whereby by change of rotational speed or direction of that end of the central pipe at the dividing holeplate 3, the twisting of the central pipe around its longitudinal axis can be accelerated, retarded or maintained.

In connection with the support of the central pipe 5, it must still be stated that in accordance with the present invention, instead of a bearing resisting axial load, it is possible to use a bearing enabling an axial movement of the central pipe 5 in relation to the dividing means or the twisting means. Such a bearing arrangement, by which the central pipe 5 can be arranged floatingly between the dividing and the twisting means, can be realized e.g. by sliding or closed bearing mounted at that end of the central pipe which has not been stationary fastened to the twisting means rotating the central pipe 5 or at that end of the central pipe 5 which is not connected with the rotational drive. Such a floating central pipe is not, of course, prestressed and it can therefore be used most advantageously in solutions where a large span between support structures is not required.

## Claims

1. Alternate reverse twisting method to form a product, such as a cable or similar, composed of an inner core element (9) and/or of alternate reversely twisted elongated elements (2) which can be wires, leads, optical fibers or their groups, or similar which can be twisted as quads of wires, leads etc., by an alternate reverse twisting apparatus comprising:
   – a fixed dividing means (3) at the input end of the elements (2,9) to be treated,
   – twisting means (6) periodically rotating in alternate directions located at the output end of the treated elements (2,9),
   – thereafter arranged pressing means (7), preferably a nipple, for pressing the treated elements (2,9) tightly against each other, and
   – between said dividing means and twisting means (3,6) first and second support and guide means (4,5) supported by both said dividing means (3) and twisting means (6) for defining feedpaths of the elongated elements (2,9) to be treated, in which method the elongated elements (2) to be twisted are drawn from said dividing means (3) to said twisting means (6) via said first support and guide means composed of torsion-elastic pipes (4), whereby the elongated elements (2) are adapted to pass through said torsion-elastic pipes (4) which are twisted periodically into alternate directions, **characterized** in that said torsion-elastic pipes (4) as a group concentrically surround said second support and guide means and are twisted periodically into each direction at least 10, preferably 30 to 80 turns around and against said second support and guide means composed of an oscillating rotatable and/ or twistable central pipe (5).

2. Method according to claim 1, **characterized** in that a core element (9) is drawn from said dividing means (3) to said pressing means (7) through said central pipe (5) the inner diameter of which is greater than the diameter of said core element, and that preferably said core element (9) is coated before entering into said pressing means (7).

3. Method according to claim 1 or 2, **characterized** in that as said central pipe (5) is used an essentially rigid pipe which is fixed centrally to the twisting means (6) and mounted in bearings (11), which are adapted centrally in the dividing means (3) whereby said central pipe (5) is rotated with said twisting means (6).

4. Method according to claim 1 or 2, **characterized** in that as said central pipe (5) is used a pipe both ends of which are in bearings (11,12), and that at least one end of said central pipe is provided with a rotational drive whereby the rotation speed and rotation direction is adjusted in relation to said twisting means by means of said rotational drive.

5. Method according to claim 1 or claim 2, **characterized** in that as said central pipe (5) is used a torsion-elastic and preferably prestressed pipe, one end of which is fixed solidly and centrally to said twisting means (6), and the second of which is in bearings (11) centrally at said dividing means (3), and that said second end of said central pipe is provided with a rotational drive whereby oscillating rotation and twisting speed and/or oscillating rotation and twisting direction are adjusted in relation to said twisting means (6) by means of said rotational drive.

6. Method according to anyone of claims 1 to 5, **characterized** in that said torsion-elastic pipes (4) are pipes preferably made of polyamide or polytetrafluorethylene, one ends of which are connected circumferentially to said dividing means (3) and the other ends of which are connected circumferentially to said twisting means (6) and that the oscillating twisting rate and direction periodically to opposite directions around said central pipe (5) are defined by the rotational movement of said twisting means (6).

7. Method according to anyone of claims 4 to 6, **characterized** in that during the twisting of said torsion-elastic pipes (4) by means of said twisting means (6) said central pipe (5) is rotated by means of said rotational drive with different speed and/or direction in relation to the speed and/or direction of said twisting means to decrease friction between said central pipe (5) and said torsion-elastic pipes (4) and the tendency of said torsion-elastic pipes (4) to accumulate with denser pitch at the end of said central pipe (5) towards said twisting means (6) as well as to increase twisting turns around said central pipe (5) in one direction.

8. Method according to anyone of the foregoing claims, **characterized** in that said torsion-elastic pipes (4) are bound or connected elastically side by side in close vicinity to each other to form a preferably uniform pipe mantle around said second support and guide means (4, 5).

9. Alternate reverse twisting apparatus to form a product, such as a cable or similar, composed of an inner core element (9) and/or of alternate reversely twisted elongated elements (2) which can be wires, leads, optical fibers or their groups, or similar which can be twisted as quads of wires, leads etc., said apparatus comprising:
   – a fixed dividing means (3), preferably a hole plate, at the input end of the elements (2,9) to be treated,
   – twisting means (6), preferably a hole plate, periodically rotating in alternate directions located at the output end of the treated elements (2,9),
   – pressing means (7), preferably a nipple, for pressing the treated elements (2,9) tightly against each other after said twisting means, and
– between said dividing means and twisting means (3,6) first and second support and guide means (4,5) for defining feedpaths of the elongated elements (2,9) to be treated, first ends of said support and guide means (4,5) being supported by said dividing means (3) and the other ends of said support and guide means (4,5) being supported by said twisting means (6), whereby the elongated elements (2) to be twisted pass through said first support and guide means composed of torsion-elastic pipes (4) which are twisted periodically into alternate directions, **characterized** in that said torsion-elastic pipes (4) as a group concentrically surround said second support and guide means and and during each twisting cycle are twisted into each direction at least 10, preferably 30 to 80 turns around and against said second support and guide means composed of an oscillating rotatable and/or twistable central pipe (5).

10. Apparatus according to claim 9, **characterized** in that one end of said central pipe (5) is fixed centrally and solidly to said twisting means (6) to rotate with it, and that the other end of said central pipe (5) is mounted by means of a bearing (11) centrally to said dividing means (3) to rotate in relation to said dividing means (3).

11. Apparatus according to claim 9, **characterized** in that said central pipe (5) is a torsion-elastic and preferably prestressed torsion pipe, that one end of said torsion pipe is fixed centrally and solidly to said twisting means (6) to rotate with it, and that the other end of said torsion pipe is mounted centrally by means of bearings (11) to said dividing means (3) and is provided with its own rotational drive to adjust oscillating rotation and twisting speed as well as direction in relation to said twisting means (6).

12. Apparatus according to claim 9, **characterized** in that said central pipe (5) is a rigid and preferably prestressed pipe, that both ends of said central pipe are mounted centrally by means of bearings (11, 12) one end to said dividing means (3) and the other end to said twisting means (6), and that at least that end of said central pipe towards said dividing means (3) is provided with a rotational drive to rotate said central pipe (5) independently in relation to said twisting means (6).

13. Apparatus according to anyone of claims 9 to 12, **characterized** in that the inner diameter of said central pipe (5) is greater than the inner diameter of said torsion-elastic pipes (4).

14. Apparatus according to anyone of claims 9 to 13, **characterized** in that said central pipe (5) is coated by a resilient material layer, preferably made of polyurethane, to which said torsion-elastic pipes (4) are pressed during the twisting phase.

15. Apparatus according to anyone of claims 9 to 14, **characterized** in that to compensate the tensile load caused by the twisting of said torsion-elastic pipes (4) each of said torsion-elastic pipes include resilient means (15) to connect the torsion-elastic pipe in the direction of its own longitudinal axis flexibly to said dividing means (3) and/or to said twisting means (6), and that to minimize the torsion load caused by the twisting of said torsion-elastic pipes (4) each of said torsion-elastic pipes is connected to said dividing means (3) and/or to said twisting means (6) rotatably around its own longitudinal axis, so that, said resilient means (15) for each of said torsion-elastic pipes (4) is adapted to rotate with said torsion-elastic pipes in relation to the openings of said dividing means (3) and/or twisting means (6).

16. Apparatus according to anyone of claims 9 to 15, **characterized** in that the length of both said central pipe (5) and said torsion-elastic pipes (4) is between 5 to 30 meters, preferably between 10 to 20 meters.

17. Apparatus according to anyone of claims 9 to 16, **characterized** in that said torsion-elastic pipes (4) are bound or connected elastically side by side in close vicinity to each other to form a preferably uniform pipe mantle around said second support and guide means (4, 5).

18. Apparatus according to claim 17, **characterized** in that said peripheral pipe mantle composed of torsion-elastic pipes (4) is bound elastically by means of adapting at least one elastic connecting ring around said pipe mantle or by means of joining adjacent torsion-elastic pipes together by elastic strip portions.

**Patentansprüche**

1. Alternierendes Umkehrzwirnverfahren zum Bilden eines Produktes, beispielsweise ein Kabel oder dergleichen, bestehend aus einem inneren Kernelement (9) und/oder alternierend umkehrgezwirnten länglichen Elementen (2) wie Drähte, Leitungen, optische Fasern oder Gruppen davon, oder ähnliches, das als Vierergruppe von Drähten, Leitungen und so weiter mittels einer alternierenden Umkehrzwirnvorrichtung gezwirnt werden kann, umfassend:
   – ein festes Trennmittel (3) am Einführungsende der zu bearbeitenden Elemente (2, 9),
   – Zwirnmittel (6), die periodisch in alternierenden Richtungen drehen und am Ausgangsende der bearbeiteten Elemente (2, 9) angeordnet sind,
   – nachfolgend angeordnete Preßmittel (7), vorzugsweise ein Nippel, zum Pressen der bearbeiteten Elemente (2, 9) dicht gegeneinander, und
   – zwischen den Trennmitteln und Zwirnmitteln (3, 6) erste und zweite Trag- und Führungsmittel (4, 5) gehalten durch die Trennmittel (3) und Zwirnmittel (6), um für die zu bearbeitenden länglichen Elemente (2, 9) Führungswege zu bilden, bei welchem Verfahren die zu zwirnenden länglichen Elemente (2) von den genannten Trennmitteln (3) zu den genannten Zwirnmitteln (6) über die genannten ersten Tragmittel und Führungsmittel, die aus torsionselastischen Rohren (4) bestehen, gezogen werden, wobei die länglichen Elemente (2) durch die genannten torsionselastischen Rohre (4) hindurchgehen können, welche periodisch in alternierenden Richtungen gedreht werden, dadurch **gekennzeichnet**, daß die genannten torsionselastischen Rohre (4) als eine Gruppe die zweiten Trag- und Führungsmittel konzentrisch umgeben und periodisch in jeder Richtung mit wenigstens 10, vorzugsweise 30 - 80 Umdrehungen um und gegen die zweiten Trag- und Führungsmittel, die durch ein oszillierend rotierbares und/oder verdrehbares zentrales Rohr (5) gebildet sind, gedreht werden.

2. Verfahren nach Anspruch 1, dadurch **gekennzeichnet**, daß ein Kernelement (9) von den genannten Trennmitteln (3) zu den genannten Preßmitteln (7) durch das genannte zentrale Rohr (5) gezogen wird, dessen innerer Durchmesser größer ist als der Durchmesser des genannten Kernelementes, und daß vorzugsweise das genannte Kernelement (9) beschichtet wird, bevor es in die genannten Preßmittel (7) eintritt.

3. Verfahren nach Anspruch 1 oder 2, dadurch **gekennzeichnet**, daß als das genannte zentrale Rohr (5) ein im wesentlichen starres Rohr verwendet wird, das zentrisch zu den Zwirnmitteln (6) fixiert und in Lagern (11) montiert ist, wobei die Lager zentrisch in die Trennmittel (3) eingepaßt sind und das genannte zentrale Rohr (5) mit den genannten Zwirnmitteln (6) rotiert wird.

4. Verfahren nach Anspruch 1 oder 2, dadurch **gekennzeichnet**, daß als zentrales Rohr (5) ein Rohr verwendet wird, dessen beide Enden in Lager (11, 12) eingesetzt sind, und daß wenigstens ein Ende des genannten zentralen Rohrs einen Rotationsantrieb aufweist, wobei die Rotationsgeschwindigkeit und die Rotationsrichtung bezüglich der genannten Zwirnmittel mittels des genannten Rotationsantriebes eingestellt wird.

5. Verfahren nach Anspruch 1 oder 2, dadurch **gekennzeichnet**, daß als zentrales Rohr (5) ein torsionselastisches und vorzugsweise vorgespanntes Rohr verwendet wird, wobei ein Ende des Rohres fest und zentrisch an den genannten Zwirnmitteln (6) befestigt ist, und das andere Ende in Lager (11) zentrisch bei den genannten Trennmitteln (3) gelagert ist, und daß das genannte zweite Ende des genannten zentralen Rohres mit einem Rotationsantrieb versehen ist, wobei oszillierende Rotations- und Zwirngeschwindigkeit und/oder oszillierende Rotations- und Zwirnrichtung bezüglich der genannten Zwirnmittel (6) mittels des genannten Rotationsantriebes einstellbar sind.

6. Verfahren nach einem der Ansprüche 1 bis 5, dadurch **gekennzeichnet**, daß die genannten torsionselastischen Rohre (4) vorzugsweise aus Polyamid oder Polytetrafluoräthylen hergestellt sind, wobei die einen Enden am Umfang an den genannten Trennmitteln (3) befestigt sind und die anderen Enden am Umfang an den genannten Zwirnmitteln (6) befestigt sind, und daß die oszillierende Zwirngeschwindigkeit und die Richtung periodisch in entgegengesetzten Richtungen um das genannte zentrale Rohr (5) gegeben sind durch die Rotationsbewegung der genannten Zwirnmittel (6).

7. Verfahren nach einem der Ansprüche 4 bis 6, dadurch **gekennzeichnet**, daß während des Verdrehens der genannten torsionselastischen Rohre (41 mittels der genannten Zwirnmittel (6) das genannte zentrale Rohr (5) mittels des genannten Rotationsantriebes mit unterschiedlicher Geschwindigkeit und-/oder Richtung bezüglich der Geschwindigkeit und/oder Richtung der genannten Zwirnmittel rotiert, zur Verminderung der Reibung zwischen dem genannten zentralen Rohr (5) und den genannten torsionselastischen Rohren (4) und der Tendenz der genannten torsionselastischen Rohre (4) mit engerer Steigung am Ende des zentralen Rohres (5) zu den Zwirnmitteln (6) hin zusammenzurücken als auch zur Erhöhung der Umwindungen des zentralen Rohres (5) in einer Richtung.

8. Verfahren nach einem der vorhergehenden Ansprüche, dadurch **gekennzeichnet**, daß die genannten torsionselastischen Rohre (4) elastisch Seite an Seite in naher Nachbarschaft zueinander verbunden sind, um dadurch einen vorzugsweise einheitlichen Rohrmantel um die genannten zweiten Trag- und Führungsmittel (4, 5) zu binden.

9. Alternierende Umkehrzwirnvorrichtung zum Bilden eines Produktes, beispielsweise ein Kabel oder dergleichen, bestehend aus einem inneren Kernelement (9) und/oder alternierend umkehrgezwirnten, länglichen Elementen (2) wie Drähte, Leitungen, optische Fasern oder Gruppen davon, oder ähnliches, das als Vierergruppe von Drähten, Leitungen und so weiter gezwirnt werden kann, wobei diese Vorrichtung umfaßt:

– ein festes Trennmittel (3), vorzugsweise eine Lochplatte, am Einführungsende der zu bearbeitenden Elemente (2, 9),

– Zwirnmittel (6), vorzugsweise eine Lochplatte, die periodisch in alternierenden Richtungen drehen und am Ausgangsende der bearbeiteten Elemente (2, 9) angeordnet sind,

– Preßmittel (7), vorzugsweise ein Nippel zum Pressen der bearbeiteten Elemente (2, 9) dicht gegeneinander, nach den genannten Zwirnmitteln, und

– zwischen den genannten Trennmitteln und Zwirnmitteln (3, 6) erste und zweite Trag- und Führungs-mittel (4, 5) zur Bildung von Führungswegen der zu bearbeitenden länglichen Elemente (2, 9), wobei erste Enden der genannten Trag- und Führungsmittel (4, 5) durch die genannten Trennmittel (3) und die anderen Enden der genannten Trag- und Führungsmittel (4, 5) durch die genannten Zwirnmittel (6) gehalten sind, wobei die länglichen Elemente (2), welche zu zwirnen sind, durch die genannten ersten Trag- und Führungsmittel hindurchgehen und diese aus torsionselastischen Rohren (4) bestehen, die periodisch in alternierenden Richtungen gedreht werden, dadurch **gekennzeichnet**, daß die genannten torsionselastischen Rohre (4) als eine Gruppe konzentrisch die genannten zweiten Trag- und Führungsmittel umgeben und daß sie während jedes Zwirnzyklus in jede Richtung mit wenigstens 10, vorzugsweise 30 - 80 Umwindungen um und gegen die genannten zweiten Trag- und Führungsmittel gedreht werden, wobei diese Trag- und Führungsmittel aus einem oszillierend rotierbaren und/oder verdrehbaren zentralen Rohr (5) bestehen.

10. Vorrichtung nach Anspruch 9, dadurch **gekennzeichnet**, daß das eine Ende des genannten zentralen Rohres (5) zentrisch und fest mit den genannten Zwirnmitteln (6) verbunden ist, um mit diesen zu rotieren, und daß das andere Ende des genannten zentralen Rohres (5) mit einem Lager (11) zentrisch an den genannten Trennmitteln (3) montiert ist um relativ zu den genannten Trennmitteln (3) zu rotieren.

11. Vorrichtung nach Anspruch 9, dadurch **gekennzeichnet**, daß das genannte zentrale Rohr (5) ein torsionselastisches und vorzugsweise vorgespanntes Torsionsrohr ist, daß das eine Ende des genannten Torsionsrohres zentrisch und fest mit den genannten Zwirnmitteln (6) verbunden ist, um mit diesen zu rotieren, und daß das andere Ende des genannten Torsionsrohres mit Lagern (11) zentrisch an den genannten Trennmitteln (3) montiert ist und mit einem eigenen Rotationsantrieb versehen ist, um die oszillierende Rotation, die Zwirngeschwindigkeit als auch die Richtung relativ zu den genannten Zwirnmitteln (6) einzustellen.

12. Vorrichtung nach Anspruch 9, dadurch **gekennzeichnet**, daß das genannte zentrale Rohr (5) ein starres und vorzugsweise vorgespanntes Rohr ist, daß beide Enden des genannten zentralen Rohres mittels Lagern (11, 12) zentrisch am einen Ende an den genannten Trennmitteln (3) und am anderen Ende an den genannten Zwirnmitteln (6) montiert sind, und daß wenigstens das zu den Trennmitteln (3) weisende Ende des genannten zentralen Rohres mit einem Rotationsantrieb versehen ist, um das genannte zentrale Rohr (5) unabhängig relativ zu den genannten Zwirnmitteln (6) zu drehen.

13. Vorrichtung nach einem der Ansprüche 9 bis 12, dadurch **gekennzeichnet**, daß der innere Durchmesser der genannten zentralen Rohre (5) größer ist als der innere Durchmesser der genannten torsionselastischen Rohre (4).

14. Vorrichtung nach einem der Ansprüche 9 bis 13, dadurch **gekennzeichnet**, daß das zentrale Rohr (5) mit einem elastischen Material beschichtet ist, vorzugsweise mit Polyurethan, wobei die genannten torsionselastischen Rohre (4) während des Zwirnvorganges gegen diese Beschichtung gedrückt werden.

15. Vorrichtung nach einem der Ansprüche 9 bis 14, dadurch **gekennzeichnet**, daß für die Kompensation der Zugspannung, verursacht durch das Verdrehen der genannten torsionselastischen Rohre (4), jedes der genannten torsionselastischen Rohre elastische Mittel (15) aufweist, um jeweils das torsionselastische Rohr in Richtung seiner Längsachse flexibel mit den genannten Trennmitteln (3) und/oder den genannten Zwirnmitteln (6) zu verbinden, und daß zur Minimierung der Torsionsspannung, verursacht durch das Verdrehen der genannten torsionselastischen Rohre (4) jedes der genannten torsionselastischen Rohre mit dem Trennmittel (3) und/oder den genannten Zwirnmitteln (6) rotierbar um die eigene Drehachse verbunden ist, derart, daß sich die genannten elastischen Mittel (15) für jedes der genannten torsionselastischen Rohre (4) mit den genannten torsionselastischen Rohren relativ zu den Öffnungen der genannten Trennmittel (3) und/oder Zwirnmittel (6) drehen zu können.

16. Vorrichtung nach einem der Ansprüche 9 bis 15, dadurch **gekennzeichnet**, daß die Länge des zentralen Rohres (5) und der genannten torsionselastischen Rohre (4) im Bereich zwischen 5 und 30 m liegt, vorzugsweise zwischen 10 und 20 m.

17. Vorrichtung nach einem der Ansprüche 9 bis 16, dadurch **gekennzeichnet**, daß die genannten torsionselastischen Rohre (4) elastisch Seite an Seite in naher Nachbarschaft miteinander verbunden sind, um dadurch einen vorzugsweise uniformen Rohrmantel um die genannten zweiten Trag- und Führungsmittel (4, 5) zu bilden.

18. Vorrichtung nach Anspruch 17, dadurch **gekennzeichnet**, daß der genannte periphere Rohrmantel, der aus torsionselastischen Rohren (4) besteht, durch Anpassung wenigstens eines elastischen Verbindungsringes um den genannten Rohrmantel oder durch Verbinden benachbarter torsionselastischer Rohre mittels elastischen Streifenteilen gebildet ist.

**Revendications**

1. Procédé de torsion alternée inversée pour former un produit, tel qu'un câble ou équivalent, composé d'un élément d'âme intérieur (9) et/ou d'éléments de grande longueur (2) torsadés en torsion alternée inversée, qui peuvent être des fils, conducteurs, fibres optiques ou des groupes de tels fils ou équivalents, qui peuvent être torsadés en quartes de fils, conducteurs, etc., par un appareil de torsion alternée inversée comprenant :

– des moyens de division fixes (3) situés à l'extrémité d'entrée des éléments (2, 9) qu'il s'agit de traiter,

– des moyens de torsion (6) qui tournent périodiquement dans des sens alternatifs, placés à l'extrémité de sortie des éléments traités (2, 9),

– des moyens de pression (7) disposés à la suite, de préférence un nipple, servant à comprimer les éléments traités (2, 9) étroitement les uns contre les autres, et

– entre lesdits moyens de division et lesdits moyens de torsion (3, 6), des premiers et deuxièmes moyens supports et de guidage (4, 5) supportés par lesdits moyens de division (3) et moyens de torsion (6) pour définir des couloirs d'avance des éléments de grande longueur (2, 9) qu'il s'agit de traiter, procédé dans lequel les éléments de grandeur longueur (2) qu'il s'agit de torsader sont tirés desdits moyens de division (3) auxdits moyens de torsion (6) en passant par lesdits premiers moyens de support et de guidage composés de tubes (4) élastiques en torsion, de sorte que les éléments de grandeur longueur (2) sont adaptés pour passer des lesdits tubes élastiques en torsion (4) qui sont torsadés périodiquement dans des sens alternatifs, caractérisé en ce que lesdits tubes élastiques en torsion (4) forment un groupe qui entoure concentriquement lesdits deuxièmes moyens de support et de guidage, et sont torsadés périodiquement dans chaque sens au moins de 10 tours, de préférence de 30 à 80 tours autour desdits deuxièmes moyens de support et de guidage et contre ces deuxièmes moyens, lesquels sont composés d'un tube central (5) qui peut être animé d'une rotation oscillante et/ou être soumis à un torsion oscillant.

2. Procédé selon la revendication 1, caractérisé en ce qu'un élément d'âme (9) est tiré desdits moyens de division (3) auxdits moyens de pression (7) en passant dans ledit tube central (5), dont le diamètre intérieur est plus grand que le diamètre dudit élément d'âme, et en ce que, ledit élément d'âme (9) est de préférence revêtu avant d'entrer dans lesdits moyens de pression (7).

3. Procédé selon la revendication 1 ou 2, caractérisé en ce qu'on utilise pour ledit tube central (5) un tube sensiblement rigide qui est fixé aux moyens de torsion (6) en position centrale et qui est monté dans des paliers (11) qui sont montés en position centrale dans les moyens de division (3), de sorte que ledit tube central (5) est entraîné en rotation avec lesdits moyens de torsion (6).

4. Procédé selon la revendication 1 ou 2, caractérisé en ce qu'on utilise pour ledit tube central (5) un tube dont les deux extrémités sont montées dans des paliers (11, 12) et en ce qu'au moins une extrémité dudit tube central est munie d'un entraînement en rotation, de sorte que la vitesse de rotation et le sens de rotation sont ajustés par rapport auxdits moyens de torsion à l'aide dudit entraînement en rotation.

5. Procédé selon la revendication 1 ou la revendication 2, caractérisé en ce qu'on utilise pour ledit tube central (5) un tube élastique en torsion et de préférence précontraint, dont une extrémité est fixée solidairement et en positon centrale auxdits moyens de torsion (6) et dont la deuxième est montée dans des paliers (11) au centre desdits moyens de division (3), et de sorte que ladite deuxième extrémité dudit tube central est équipée d'un entraînement en rotation, à l'aide duquel la vitesse de rotation oscillante et de torsion et/ou le sens de rotation oscillante et de torsion sont ajustés par rapport aux moyens de torsion (6) à l'aide dudit entraînement en rotation.

6. Procédé selon une quelconque des revendications 1 à 5, caractérisé en ce que lesdits tubes élastiques en torsion (4) sont des tubes qui sont de préférence faits de polyamide ou de polytétrafluoréthylène, dont les premières extrémités sont reliées circonférentiellement auxdits moyens de division (3) et dont les autres extrémités sont reliées circonférentiellement auxdits moyens de torsion (6), et en ce que la vitesse et le sens de torsion qui oscillent périodiquement dans les deux sens opposés autour dudit tube central (5) sont définis par le mouvement de rotation desdits moyens de torsion (6).

7. Procédé selon une quelconque des revendications 4 à 6, caractérisé en ce que, pendant la torsion desdits tubes élastiques en torsion (4) qui est opérée à l'aide desdits moyens de torsion (6), ledit tube central (5) est entraîné en rotation à l'aide dudit entraînement en rotation à une vitesse et/ou dans un sens qui sont différents de la vitesse et/ou du sens de rotation desdits moyens de torsion, pour réduire le frottement entre ledit tube central (5) et lesdits tubes élastiques en torsion (4), et pour réduire la tendance desdits tubes élastiques en torsion (4) à s'accumuler avec un pas plus dense à l'extrémité dudit tube central (5) située vers lesdits moyens de torsion (6), ainsi que pour augmenter le nombre des tours de torsion autour dudit tube central (5) dans un sens.

8. Procédé selon une quelconque des revendications précédentes, caractérisé en ce que lesdits tubes élastiques en torsion (4) sont liés ou assemblés élastiquement côte à côte, très rapprochés les uns des autres, pour former une gaine de tubes, de préférence uniforme, autour desdits deuxièmes moyens de support et de guidage (4, 5).

9. Appareil de torsion alternée inversée destiné à former un produit, tel qu'un câble ou analogue, composé d'un élement d'âme intérieur (9) et/ou d'éléments de grande longueur (2) torsadés en torsion alternée inversée, qui peuvent être des fils, conducteurs, fibres optiques ou groupes de tels fils, conducteurs ou fibres, ou analogues, qui peuvent être torsadés sous la forme de quartes de fils, conducteurs, etc., ledit appareil comprenant :

– des moyens de division fixes (3) , de préférence une plaque à trous, à l'extrémité d'entrée des éléments (2, 9) à traiter ;

– des moyens de torsion (6), de préférence une plaque à trous, qui tournent périodiquement dans des sens alternatifs, placés à l'extrémité de sortie des éléments traités (2, 9),

– des moyens de pression (7), de préférence un nipple, servant à comprimer les éléments traités (2, 9) étroitement les uns contre les autres en aval desdits moyens de torsion, et

– entre lesdits moyens de division et lesdits moyens de torsion (3, 6), des premiers et deuxièmes moyens de support et de guidage (4, 5) servant à définir des couloirs d'avance des éléments de grande longueur (2, 9) à traiter, des premières extrémités desdits moyens de support et de guidage (4, 5) étant supportées par lesdits moyens de division (3) et les autres extrémités desdits moyens de support et de guidage (4, 5) étant supportées par lesdits moyens de torsion (6), de sorte que les éléments de grande longueur (2) qu'il s'agit de torsader passent dans lesdits premiers moyens de support et de guidage composés de tubes élastiques en torsion (4) qui sont torsadés périodiquement dans des sens alternatifs caractérisé en ce que lesdits tubes élastiques en torsion (4), agencés en un groupe qui entoure concentriquement lesdits deuxièmes moyens de support et de guidage, et pendant chaque cycle de torsion, sont torsadés dans chaque sens d'au moins 10 tours, de préférence de 30 à 80 tours autour desdits deuxièmes moyens de support et de guidage et contre ces moyens, lesquels sont composés d'un tube central (5) pouvant être animé d'une rotation oscillante et/ou capable de se torsader.

10. Appareil selon la revendication 9, caractérisé en ce qu'une extrémité dudit tube central (5) est fixée en position centrale et solidairement auxdits moyens de torsion (6) pour tourner avec ceux-ci, et que l'autre extrémité dudit tube central (5) est montée à l'aide d'un palier (11) en position centrale par rapport auxdits moyens de division (3) pour tourner par rapport auxdits moyens de division (3).

11. Apparpil selon la revendication 9, caractérisé en ce que ledit tube central (5) est un tube de torsion élastique en torsion et de préférence précontraint, qu'une extrémité dudit tube de torsion est fixée en position centrale et solidairement auxdits moyens de torsion (6) pour tourner avec ceux-ci, et que l'autre extrémité dudit tube de torsion est montée en position centrale à l'aide de paliers (11) par rapport aux moyens de division (3) et est muni de son propre entraînement en rotation pour ajuster la vitesse et le sens de la rotation oscillante et de la torsion par rapport auxdits moyens de torsion (6).

12. Appareil selon la revendication 9, caractérisé en ce que ledit tube central (5) est un tube rigide et de préférence précontraint, que les deux extrémités dudit tube central sont montées en position centrale à l'aide de paliers (11, 12), une extrémité dans lesdits moyens de division (3) et l'autre extrémité dans lesdits moyens de torsion (6) et en ce qu'au moins l'extrémité dudit tube central dirigée vers lesdits moyens de division (3) est munie d'un entraînement en rotation servant à faire tourner ledit tube central (5) indépendamment par rapport auxdits moyens de torsion (6).

13. Appareil selon une quelconque des revendications 9 à 12, caractérisé en ce que le diamètre intérieur dudit tube central (5) est plus grand que le diamètre intérieur desdits tubes élastiques en torsion (4).

14. Appareil selon une quelconque des revendications 9 à 13, caractérisé en ce que ledit tube central (5) est revêtu d'une couche de matière élastique, faite de préférence de polyuréthane, contre laquelle lesdits tubes élastiques en torsion (4) sont pressés pendant la phase de torsion.

15. Appareil selon une quelconque des revendications 9 à 14, caractérisé en ce que, pour compenser la charge de traction provoquée par la torsion desdits tubes élastiques en torsion (4), chacun desdits tubes élastiques en torsion comprend des moyens élastiques (15) servant à relier ce tube élastique en torsion auxdits moyens de division (3) et/ou auxdits moyens de torsion (6) par une liaison capable de céder selon son propre axe longitudinal et en ce que, pour réduire à un miximum la charge de torsion provoquée par la torsion desdits tubes élastiques en torsion (4), chacun desdits tubes élastiques en torsion est relié auxdits moyens de division (3) et/ou auxdits moyens de torsion (6) librement en rotation autour de son propre axe longitudinal, de sorte que lesdits moyens élastiques (15) prévus pour chacun desdits tubes élastiques en torsion (4) sont adaptés pour tourner avec lesdits tubes élastiques en torsion par rapport aux ouvertures desdits moyens de division (3) et/ou desdits moyens de torsion (6).

16. Appareil selon une quelconque des revendications 9 à 15, caractérisé en ce que la longueur dudit tube central (5) et desdits tubes élastiques en torsion (4) est comprise entre 5 et 30 mètres, de préférence entre 10 et 20 mètres.

17. Appareil selon une quelconque des revendications 9 à 16, caractérisé en ce que lesdits tubes élastiques en torsion (4) sont liés ou assemblés élastiquement côte à côte, très rapprochés les uns des autres, pour former une gaine de tubes de préférence uniforme autour desdits deuxièmes moyens de support et de guidage (4, 5).

19. Appareil selon la revendication 17, caractérisé en ce que ladite graine de tubes périphériques, composée de tubes élastiques en torsion (4), est liée élastiquement par le montage d'au moins une bague de liaison élastique autour de ladite gaine de tubes, ou en réunissant les tubes élastiques en torsion adjacents les uns aux autres par des parties de bandes élastiques.

FIG. 1

FIG. 2

FIG. 3

FIG. 4

FIG. 5